# FASCICULE DE BREVET EUROPEEN

(11) **EP 0 389 353 B1**
(45) Date de publication et mention de la délivrance du brevet: **30.06.1993**
(21) Numéro de dépôt: 90400744.0
(22) Date de dépôt: 20.03.1990
(51) Int. Cl.: F02C 7/06

(54) **Suspension du rotor de la turbine basse pression d'une turbomachine a double corps**
Lagerung für den Niederdruckrotor einer Zweiwellenturbomaschine
Support for the low pressure rotor of a two-spool turbomachine

(30) Priorité: 23.03.1989 FR 8903839
(43) Date de publication de la demande: 26.09.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Mandet, Gérard, Marcel, François, F-77133 Fericy (FR); Serre, Jacques René, F-77000 Melun (FR)
(74) Mandataire: Moinat, François

(56) Documents cités:
- DE-A- 2 611 682
- FR-A- 1 326 181
- FR-A- 2 211 589
- GB-A- 511 597
- US-A- 3 692 436

## Description

La présente invention concerne la suspension du rotor de la turbine basse pression d'une turbomachine à double corps.

Le brevet français n°1 462 062 montre une turbomachine à soufflante arrière dans laquelle la turbo-soufflante comprend un rotor à un seul étage d'aubes relié à des arbres courts respectivement avant et arrière qui sont supportés respectivement par des paliers. Les paliers sont eux-mêmes en appui sur la structure stationnaire de la turbo-soufflante par l'intermédiaire de tirants ou ailettes disposées en amont et en aval de la turbo-soufflante.

Le brevet français n°1 527 370 montre un turbo-réacteur à souffflante avant dans laquelle la turbine basse pression comporte plusieurs étages d'aubes montées sur un tambour qui est porté à ses deux extrémités par des éléments coniques tourillonnant dans des paniers à rouleaux en appui respectivement sur des entretoises radiales par l'intermédiaire d'organes coniques de support disposés en amont et en aval de la turbine basse pression, les entretoises étant montées sur le carter de la turbomachine.

Les systèmes de suspension du rotor de la turbine basse pression montrés dans ces deux documents comportent des éléments de suspension dudit rotor disposés en amont et en aval de la turbine basse pression, ce qui entraîne des difficultés et des coûts au montage et au démontage de la turbomachine.

Pour faciliter le montage et le démontage de la turbomachine, il est connu que l'on peut supprimer les entretoises radiales disposées en amont de la turbine basse pression en utilisant un palier inter-arbres entre le corps haute pression et l'arbre de la turbine basse pression.

La suspension du rotor basse pression uniquement par l'arrière de la turbine basse pression donne alors à l'arbre basse pression une souplesse importante qui peut générer des vibrations excessives dans cette turbine, et on peut craindre des transmissions d'excitations vibratoires d'un corps vers l'autre par le fait que le corps haute pression s'appuie sur l'arbre basse pression.

Il est également connu que l'on peut supprimer les entretoises radiales disposées à l'arrière de la turbine basse pression, en faisant porter celle-ci uniquement par l'avant à l'aide d'un carter inter-turbine disposé entre la turbine basse pression et la turbine haute pression. Ce type de montage peut également entraîner des vibrations indésirables surtout lorsque la turbine basse pression comporte un grand nombre d'étages d'aubes.

On connait également par FR-A-2 211 589 une turbomachine à double corps comprenant une turbine haute-pression entrainant un arbre creux et une turbine basse-pression disposée en aval et entrainant un arbre tubulaire logé en partie dans ledit arbre creux et dans laquelle le rotor de la turbine basse-pression est solidarisé à un tourillon unique porté par ledit arbre tubulaire qui est supporté par deux paliers, tous deux en appui sur un support fixe cylindrique solidarisé au stator de la turbine.

Le but de la présente invention est de proposer un nouveau dispositif de suspension de la turbine basse pression d'une turbomachine à double corps qui pallie les inconvénients cités et qui permette entre autres de mieux soutenir le rotor de la turbine basse pression de manière à éviter les vibrations excessives de la turbine basse pression tout en permettant un montage et un démontage aisés de la turbomachine.

Le but est atteint selon l'invention par le fait que la turbomachine à double corps du type comprenant une turbine haute pression entraînant un arbre creux et une turbine basse pression disposée en aval de la turbine haute pression et entraînant un arbre tubulaire logeant au moins en partie dans ledit arbre creux,
et dans laquelle le rotor de la turbine basse pression est supporté à l'arrière par un palier arrière en appui sur le stator de la turbine basse pression et à l'avant par un palier avant monté sur l'arbre tubulaire de la turbine basse pression, la turbine basse pression comportant un support cylindrique qui s'étend dans l'axe de ladite turbine sur la plus grande partie de la longueur de celle-ci et qui est solidarisé au stator de ladite turbine par des entretoises radiales disposées en aval de ladite turbine, le palier avant étant interposé entre ledit support cylindrique et l'arbre tubulaire de ladite turbine caractérisée en ce qu'un palier inter-arbres est disposé entre ledit arbre creux de turbine haute-pression et ledit arbre tubulaire de turbine basse-pression et en ce que le rotor de la turbine basse pression comporte plusieurs rangées d'aubes montées sur un tambour qui est porté à ses extrémités avant et arrière respectivement par un tourillon avant solidaire de l'arbre tubulaire de la turbine basse pression et par un tourillon arrière séparé dudit arbre tubulaire et supporté par le palier arrière.

Grâce à cette structure le rotor de la turbine basse pression est porté par deux paliers qui sont en appui sur le stator de la turbine basse pression par l'arrière de la turbine basse pression, éliminant ainsi la gêne provoquée au montage ou démontage par les entretoises amont de l'art antérieur, et diminuant la flexion du rotor génératrice de vibrations.

De façon avantageuse, le support cylindrique sert d'appui au palier arrière.

Selon une variante de réalisation, le support cylindrique constitue un appui extérieur pour le palier avant disposé autour dudit support cylindrique.

Selon une autre variante, le support cylindrique comporte un alésage longitudinal ménagé dans au moins l'extrémité avant dudit support et le palier avant est monté à l'intérieur dudit alésage longitudinal.

Grâce à cette disposition, les entretoises de l'art antérieur reliées au carter inter-turbines sont éliminées et les propagations de vibrations du corps haute pression vers la turbine sont fortement atténuées.

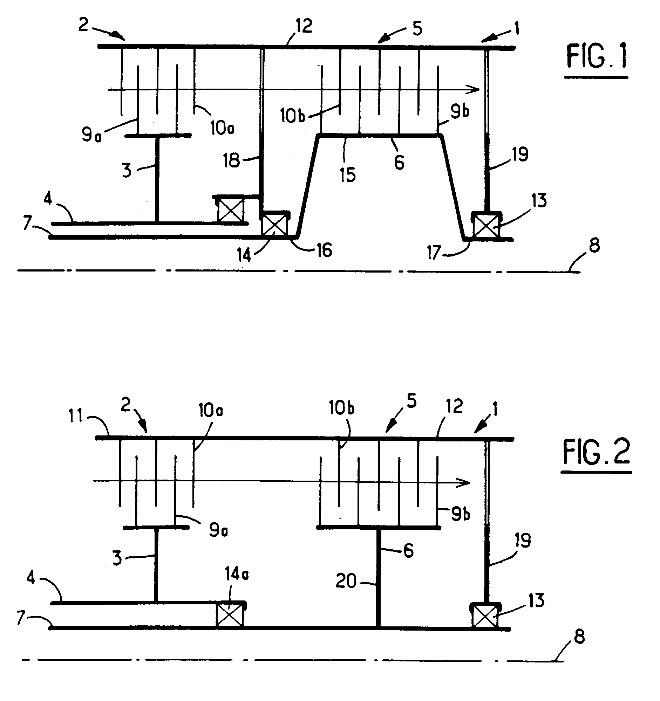

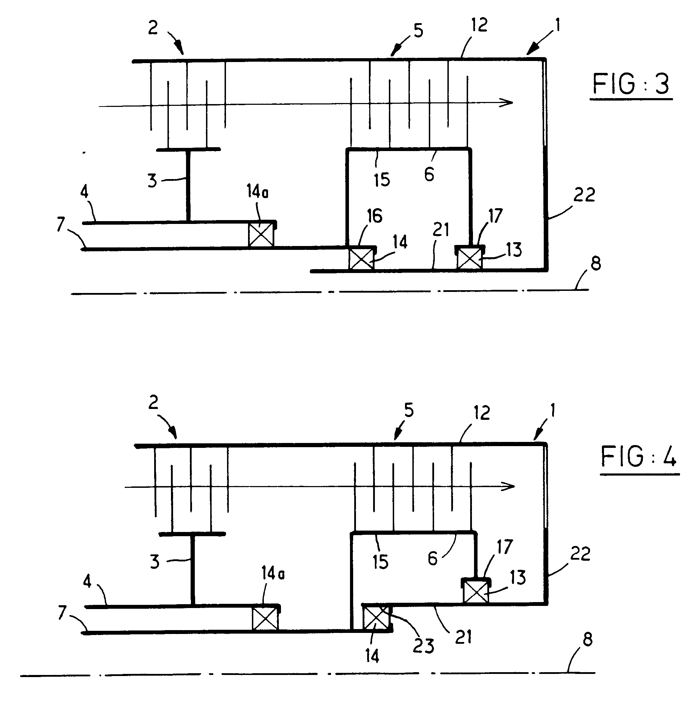

D'autres caractéristiques et avantages de l'invention apparaîtront à la lecture d'un mode de réalisation de l'invention fait à titre d'exemple et en référence au dessin annexé dans lequel :
. la figure 1 représente un schéma de principe d'un premier mode de réalisation d'une suspension du rotor de la turbine basse pression de l'art antérieur,
. la figure 2 est un schéma de principe d'un deuxième mode de réalisation de l'art antérieur,
. la figure 3 représente le schéma de principe d'un mode de réalisation selon l'invention et,
. la figure 4 est une variante du mode de réalisation

Une turbomachine à double corps 1, telle qu'un turbo-réacteur ou un moteur à turbine à gaz, comporte une turbine haute pression 2 dont le rotor 3 comprend un arbre haute pression 4 destiné à entraîner un compresseur non représenté. En aval de la turbine haute pression 2 est disposée une turbine basse pression 5 alimentée par les gaz chauds issus de la turbine haute pression 2 et dont le rotor 6 entraîne un arbre basse pression tubulaire 7 qui entraîne à son tour une soufflante non représentée et qui peut être disposée en amont du compresseur. L'arbre tubulaire 7 est disposé au moins en partie à l'intérieur de l'arbre haute pression 4 qui est creux. Les rotors 3 et 6 des deux turbines 2 et 5 sont entraînés en rotation autour de l'axe 8 de la turbomachine 1 par les gaz chauds fournis par la chambre de combustion, non représentée, située entre le compresseur et la turbine haute pression 2 grâce à des rangées d'aubes 9a et 9b réparties axialement sur les rotors 3 et 6 et alternant avec des rangées d'aubes fixes 10a et 10b montées sur le stator 11 de la turbine haute pression 2 et sur le stator 12 de la turbine basse pression 5. Les stators 11 et 12 forment l'enveloppe et le carter de la turbomachine 1.

Le rotor 6 de la turbine basse pression 5 est supporté en aval par un palier arrière 13 en appui sur le stator 12 et en amont par un palier avant 14 monté sur l'arbre 7 de la turbine basse pression 5.

La figure 1 montre une disposition connue de la suspension de la turbine basse pression. Dans cette disposition, le rotor 6 de la turbine basse pression est constitué d'un tambour 15 sur lequel sont montées les rangées d'aubes 9b et qui est porté par un tourillon avant 16 et un tourillon arrière 17 reliés au tambour 15 par des éléments coniques ou transversaux, le tourillon avant 16 étant solidarisé à l'arbre basse pression 7. Le palier avant 14 est monté sur le tourillon avant 16 ou sur l'arbre basse pression 7 et est en appui sur le stator 12 par l'intermédiaire des entretoises 18 disposées radialement entre les deux turbines 2 et 5. Le palier arrière 13 est monté sur le tourillon arrière 17 et est en appui sur le stator 12 par l'intermédiaire des entretoises 19 disposées radialement en aval de la turbine basse pression 5.

La figure 2 montre une autre disposition connue d'un montage de la suspension du rotor 6 de la turbine basse pression 5. Le rotor 6 comporte un disque 20 relié à l'arbre basse pression 7. Le palier arrière 13 est interposé entre l'arbre basse pression 7 et des entretoises 19 réparties radialement en aval de la turbine basse pression 5 et fixées au stator 12. Le palier avant 14a est, dans cette construction, un palier inter-arbres interposé entre l'arbre haute pression 4 et l'arbre basse pression 7.

Le but de la présente invention est de mettre en appui le palier avant 14 sur le stator 12 de la turbine basse pression 5 sans l'aide des entretoises 18 disposées radialement entre les deux turbines 2 et 5.

Comme on le voit sur les figures 3 et 4 représentant schématiquement plusieurs modes de réalisation de l'invention, un support cylindrique 21 est disposé longitudinalement dans l'axe 8 de la turbomachine 1. Le support 21 s'étend sur presque toute la longueur de la turbine basse pression 5 et il est solidarisé au stator 12 de la turbine basse pression 5 par des entretoises 22 régulièrement réparties radialement en aval de la turbine basse pression 5. Le palier avant 14 est interposé entre le support 21 et l'arbre basse pression 7. De façon avantageuse le palier arrière 13 est en appui sur le support 21 comme cela est représenté sur les figures 3 et 4, et le rotor 3 de la turbine haute pression 2 est supporté par l'arrière à l'aide d'un palier inter-arbres 14a interposé entre l'arbre haute pression 4 et l'arbre basse pression 7.

Le mode de réalisation représenté par les figures 3 et 4 concerne un rotor 6 d'une turbine basse pression comportant un tambour 15 porté par un tourillon arrière 17 et un tourillon avant 16 solidarisé à l'arbre basse pression 7. Le palier arrière 13 est interposé entre le tourillon arrière 17 et le support 21. Le support 21 est avantageusement muni d'un alésage 23 longitudinal s'étendant au moins dans sa partie avant et le palier avant 14 est disposé soit autour du bras de support 21 soit à l'intérieur de l'alésage 23.

## Revendications

1. Turbomachine à double corps du type comprenant une turbine haute pression (2) entrainant un arbre creux (4) et une turbine basse pression (5) disposée en aval de la turbine haute pression (2) et entrainant un arbre tubulaire (7) logeant au moins en partie dans ledit arbre creux (4), et dans laquelle le rotor (6) de la turbine basse pression (5) est supporté à l'arrière par un palier arrière (13) en appui sur le stator (12) de la turbine basse pression (5) et à l'avant par un palier avant (14) monté sur l'arbre tubulaire (7) de la turbine basse pression (5), la turbine basse pression (5) comportant un support cylindrique (21) qui s'étend dans l'axe (8) de ladite turbine (5) sur la plus grande partie de la longueur de celle-ci (5) et qui est solidarisé au stator (12) de ladite turbine (5) par des entretoises radiales (22) disposées en aval de ladite turbine, le palier avant (14) étant interposé entre ledit support cylindrique (21) et l'arbre tubulaire (7) de ladite turbine (5) caractérisé en ce qu'un palier inter-arbres (14a) est disposé entre ledit arbre creux (4) de turbine haute pression (2) et ledit arbre tubulaire (7) de turbine basse pression (5) et en ce que le rotor (6) de la turbine basse pression (5) comporte plusieurs rangées d'aubes (9b) montées sur un tambour (15) porté à ses extrémités avant et arrière respectivement par un tourillon avant (16) solidaire de l'arbre tubulaire (7) de la turbine basse pression (5) et par un tourillon arrière (17) séparé dudit arbre tubulaire (7) et supporté par le palier arrière (13).

2. Turbomachine selon la revendication 1, caractérisée en ce que le support cylindrique (21) sert d'appui au palier arrière (13), ledit palier arrière (13) étant disposé autour dudit support cylindrique (21).

3. Turbomachine selon l'une quelconque des revendications 1 ou 2, caractérisée en ce que le support cylindrique (21) comporte un alésage longitudinal (23) ménagé dans au moins l'extrémité avant dudit support (21) et en ce que le palier avant (14) est monté à l'intérieur dudit alésage longitudinal (23).

4. Turbomachine selon l'une quelconque des revendications 1 ou 2, caractérisée en ce que le support cylindrique (21) constitue un appui extérieur pour le palier avant (14) disposé autour dudit support.

## Claims

1. Twin spool turbine engine of the type comprising a high-pressure turbine (2) driving a hollow shaft (4) and a low-pressure turbine (5) located downstream of the high-pressure turbine (2) and driving a tubular shaft (7) at least partially housed in the said hollow shaft (4), and in which the rotor (6) of the low-pressure turbine (5) is supported at the rear by a rear bearing (13) bearing on the stator (12) of the low-pressure turbine (5) and at the front by a front bearing (14) mounted on the tubular shaft (7) of the low-pressure turbine (5), the low-pressure turbine (5) comprising a cylindrical support (21) which extends in the axis (8) of the said turbine (5) over most of the length of the latter (5) and which is rigidly attached to the stator (12) of the said turbine (5) by radial struts (22) located downstream of the said turbine, the front bearing (14) being interposed between the said cylindrical support (21) and the tubular shaft (7) of the said turbine (5), characterised in that an inter-shaft bearing (14a) is located between the said high-pressure turbine (2) hollow shaft (4) and the said low-pressure turbine (5) tubular shaft (7), and in that the rotor (6) of the low-pressure turbine (5) comprises several rows of blades (9b) mounted on a drum (15) carried at its front and rear ends respectively by a front journal (16) integral with the tubular shaft (7) of the low-pressure turbine (5) and by a rear journal (17) separated from the said tubular shaft (7) and supported by the rear bearing (13).

2. Turbine engine according to Claim 1, characterised in that the cylindrical support (21) acts as a support for the rear bearing (13), the said rear bearing (13) being located around the said cylindrical support (21).

3. Turbine engine according to either one of Claims 1 or 2, characterised in that the cylindrical support (21) comprises a longitudinal bore (23) made in at least the front end of the said support (21), and in that the front bearing (14) is mounted inside the said longitudinal bore (23).

4. Turbine engine according to either one of Claims 1 or 2, characterised in that the cylindrical support (21) constitutes an external support for the front bearing (14) located around the said support.

## Patentansprüche

1. Zweiwellen-Turbotriebwerk mit einer Hochdruckturbine (2), die eine Hohlwelle (4) antreibt, und einer Niederdruckturbine (5), die stromab von der Hochdruckturbine (2) angeordnet ist und eine wenigstens zum Teil in der genannten Hohlwelle (4) gelagerte Rohrwelle (7) antreibt, und bei dem der Rotor (6) der Niederdruckturbine (5) hinten von einem hinteren Lager (13) getragen wird, das sich auf dem Stator (12) der Niederdruckturbine (5) abstützt, und vorn von einem vorderen Lager (14), das an der Rohrwelle (7) der Niederdruckturbine (5) montiert ist, wobei die Niederdruckturbine (5) ein zylindrisches Tragelement (21) aufweist, das in der Achse (8) der genannten Turbine (5) über den größen Teil ihrer Länge verläuft und mit dem Stator (12) der genannten Turbine (5) durch radiale, stromab von der genannten Turbine angeordnete Streben (22) fest verbunden ist, wobei das vordere Lager (14) zwischen dem genannten zylindrischen Tragelement (21) und der Rohrwelle (7) der genannten Turbine (5) angeordnet ist,
dadurch gekennzeichnet, daß ein Zwischenwellenlager (14a) zwischen der genannten Hohlwelle (4) der Hochdruckturbine (2) und der genannten Rohrwelle (7) der Niederdruckturbine (5) angeordnet ist, und daß der Rotor (6) der Niederdruckturbine (5) mehrere Reihen von Schaufeln (9b) aufweist, die an einer Trommel (15) montiert sind, die an ihrem vorderen und hinteren Ende von einem vorderen Drehzapfen (16), der fest mit der Rohrwelle (7) der Niederdruckturbine (5) verbunden ist, bzw. von einem hinteren Drehzapfen (17), der von der genannten Rohrwelle (7) getrennt ist und auf dem hinteren Lager (13) ruht, gehalten wird.

2. Turbotriebwerk nach Anspruch 1, dadurch gekennzeichnet, daß das zylindrische Tragelement (21) als Auflage für das hintere Lager (13) dient, wobei das genannte hintere Lager (13) um das genannte zylindrische Tragelement (21) herum angeordnet ist.

3. Turbotriebwerk nach einem der Ansprüche 1 oder 2, dadurch gekennzeichnet, daß das zylindrische Tragelement (21) eine Bohrung in Längsrichtung (23) enthält, die wenigstens in dem vorderen Ende des genannten Tragelements (21) ausgeführt ist, und daß das vordere Lager (14) innerhalb der genannten Bohrung in Längsrichtung (23) eingebaut ist.

4. Turbotriebwerk nach einem der Ansprüche 1 oder 2, dadurch gekennzeichnet, daß das zylindrische Tragelement (21) eine äußere Auflage für das vordere Lager (14) bildet, das um das genannte Tragelement herum angeordnet ist.
